# EUROPEAN PATENT SPECIFICATION

(11) **EP 4 534 210 B1**
(45) Date of publication and mention of the grant of the patent: **15.04.2026**
(21) Application number: 24201976.8
(22) Date of filing: 23.09.2024
(51) Int. Cl.: B05C 5/02, B05C 9/06

(54) **DIE COATER FOR COATING ELECTRODE SLURRY AND INSULATING LIQUID**
DÜSENBESCHICHTER ZUR BESCHICHTUNG VON ELEKTRODENSCHLÄMMEN UND ISOLIERENDER FLÜSSIGKEIT
DISPOSITIF DE REVÊTEMENT À FILIÈRE POUR REVÊTIR UNE SUSPENSION D'ÉLECTRODE ET UN LIQUIDE ISOLANT

(30) Priority: 25.09.2023 KR 20230127706
(43) Date of publication of application: 09.04.2025
(73) Proprietor: LG Energy Solution, Ltd., Seoul 07335 (KR)
(72) Inventor: PARK, Joon Sun, 34122 Daejeon (KR)
(74) Representative: Plasseraud IP

(56) References cited:
- CN-U- 207 667 933
- CN-U- 218 190 724
- JP-B1- 7 116 936

## Description

### [Technical Field]

The present disclosure relates to a die coater capable of simultaneously coating two different types of liquids on an electrode base material for a secondary battery.

### [Background Art]

As the technology development and the demand for mobile devices increase, the demand for secondary batteries is also rapidly increasing. Among secondary batteries, lithium secondary batteries are widely used as energy sources for various electronic products as well as various mobile devices in terms of high energy density, a high operating voltage, and excellent storage and lifetime characteristics.

A lithium secondary battery employs an electrode in which an active material layer and an insulating layer are formed on a surface of a current collector. The electrode is manufactured using a coating device such as a die coater such that both of an electrode slurry containing an active material and an insulating liquid containing an insulating material, etc. are applied onto the surface of the current collector to overlap a portion of a corner of an electrode mixture layer and then dried.

A die coater 1 includes a first block 2 and a second block 2', a shim assembly 3 is interposed between the first block 2 and second block 2', an electrode slurry is discharged through a first slit 4, and an insulating liquid is discharged through a second slit 5.

The first block 2 comprises an insulating liquid flow path 7, which serves as a transfer path for insulating liquid flowed in through the insulating liquid inlet 6. Such insulating liquid flow path 7 is a structure extending in a direction perpendicular to a plane of the shim assembly 3 (X direction). One side end of the insulating liquid flow path 7 is connected with the one side end of the flow path (not shown) of the shim assembly 3, and the other side end of the flow path of the shim assembly 3 is connected with the second slit 5. Accordingly, the insulating liquid is discharged through the second slit 5 via the insulating liquid inlet 6, the insulating liquid flow path 7 of the first block 2, and the flow path (not shown) of the shim assembly 3 in sequence.

In such a conventional die coater 1, the position at which the insulating liquid is discharged is fixed, so that only electrodes of a single pattern can be produced. In other words, when the coating position of the insulating liquid is changed along the width direction (Y direction), such that the position of the second slit 5 is also changed, a die coater with a changed position of the insulating liquid transfer path has to be newly manufactured in response thereto, which is a problem due to the inconvenience and increased cost of newly manufacturing the die coater.

Therefore, it is necessary to develop a technology for a die coater that can adapt to a change in the coating position of an insulating liquid.

Documents CN 218 190 724 U, CN 207 667 933 U and JP 7 116936 B1 disclose examples of die coaters.

### [Summary]

### [Technical Problem]

The present disclosure is directed to providing a die coater capable of adapting to a case where a coating position of an insulating liquid is changed.

### [Technical Solution]

The present disclosure relates to a die coater capable of effectively and simultaneously coating two different types of liquids on an electrode base material for a secondary battery. To this end, the invention relates to a die coater according to claim 1.

The die coater after the invention may present one or more feature from the dependent claims, in any technically feasible combination.

In one embodiment, the insulating liquid flow path includes a first insulating liquid flow path, one end of which is connected to the fixing flow path and extending in a direction perpendicular to the extension direction of the fixing flow path (Y direction); and a second insulating liquid flow path connected to the other end of the first insulating liquid flow path and extending in a direction parallel to the fixing flow path (X direction).

This allows to fluidically connect the fixing flow path with the second slit when they have different positions in the direction perpendicular to the extension direction of the fixing flow path (Y direction), in a manner that is simple to manufacture.

In one embodiment, the fixing flow path extends in a direction (X direction) from an upper portion of the die coater to a lower portion of the die coater.

This allows the fluidic connection of the fixing flow path to the second slit through the insulating liquid flow path that extends through the lip block.

In one embodiment, any one of the first block and the second block is provided with a manifold accommodating an electrode slurry.

This allows a homogeneous discharge of the electrode slurry through the first slit.

In one embodiment, the shim assembly includes a body shim forming the first slit for discharging electrode slurry; and a sub shim forming the second slit for discharging the insulating liquid.

This allows to change the position of the second slit by only changing the sub shim while keeping the same body shim, thus reducing the number of pieces to manufacture.

In one embodiment, the body shim and the sub shim have the same height and do not overlap top and bottom to be located on the same plane between the first block and the second block.

This allows a tight contact between the sub shim and body shim with the first block on one end and the second block on the other end.

In one embodiment, a height of the first slit corresponds to a height of the body shim, and a height of the second slit is smaller than a height of the sub shim.

This allows to control the relative thicknesses of the electrode part and the insulating part in the coated materials.

In one embodiment, the sub shim comprises a concave flow path that is open toward the first block and has a bottom surface.

This allows for receiving the insulating liquid flowing from the insulating flow path of the lip block into the sub shim.

In one embodiment, the sub shim comprises a flow path that penetrates in the thickness direction of the sub shim.

In other words, the flow path extends through the sub shim away from the top and bottom faces of the sub shim in a thickness direction from the sub shim.

This allows to ensure that the flow path of the insulating material in the sub shim is fluid tight.

In one embodiment, the sub shim comprises a flow path therein.

This allows to transfer the insulating liquid flowing from the insulating flow path of the lip block towards the second slit.

In one embodiment, a closed end of the flow path of the sub shim is connected to an insulating liquid flow path of the lip block, and an open end of the flow path forms the second slit.

In one embodiment, the body shim includes a base extending along a width direction (Y direction); and first and second guides protruding and extending from both ends of the base, respectively.

This allows to enclose a reception space of the electrode slurry around the manifold and leave the first slit open for discharging the slurry.

In one embodiment, the sub shims are two or more.

This allows coating several insulating channels simultaneously.

In one embodiment, the sub shim is coupled to the first block.

This allows to hold the sub shim in place during operation.

In one embodiment, the sub shim is coupled to a lip block of the first block.

In one embodiment, the body shim is coupled to the first block and the second block.

This allows a more robust coupling.

In one embodiment, the body shim does not cover the manifold.

This allows the electrode slurry to flow from the electrode slurry inlet to the manifold.

In one embodiment, several kinds of lip blocks having paired insulating liquid flow paths formed according to a position of the second slit are provided, thereby the lip blocks are configured to be replaced to adapt the die coater to a change in position of the second slit.

This allows a simple adaptation of the die coater by replacing the lip block with another having the adequate insulating flow path formed therein to transfer the insulating liquid from the fixing flow path toward the second slit.

In one embodiment, the lip block is provided in various types with different lengths of the insulating flow path in the width direction of the first insulating liquid flow path.

### [Advantageous Effects]

The die coater according to the invention can be adapted to a change in the coating pattern through replacement of the lip block, thereby the overall die coater is not required to be newly manufactured when a coating pattern is changed, thereby reducing the increase in effort and cost due to newly manufacture of the die coater.

In accordance with a die coater of the present disclosure, wherein the first block includes a fixing portion and a lip block configured to be coupled to and detachable from the fixing portion, the lip block being provided with an insulating liquid flow path, several types of lip blocks may be provided, having different insulating liquid flow paths corresponding to the possibilities of position of the second slit through which the insulating liquid is discharged, so that in case the position of the second slit is changed, the die coater can be adapted to the change in the coating pattern by replacing the lip block with another lip block having an insulating liquid flow path suitable for flowing the insulating liquid into the second slit.

The die coater according to the present disclosure is configured to discharge an electrode slurry and an insulating liquid simultaneously, thereby effectively coating two different types of liquid on an electrode base material.

### [Brief Description of the Drawings]

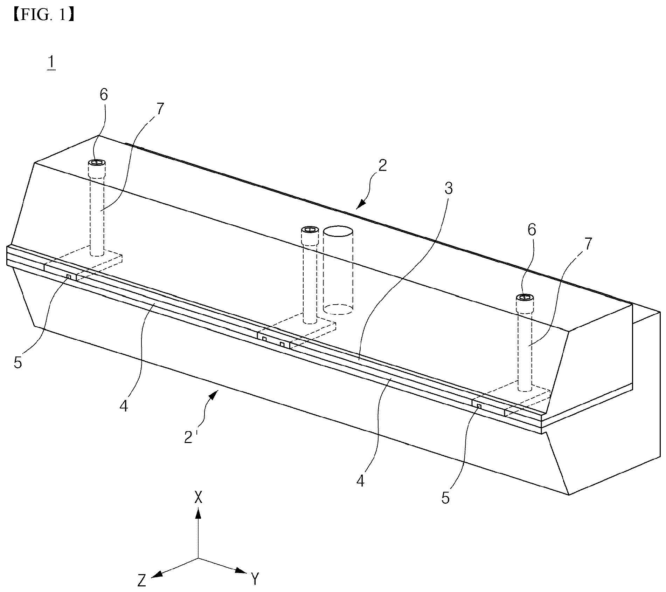

FIG. 1 is a drawing illustrating a die coater according to the related art.
FIG. 2 is an exploded perspective view illustrating a die coater according to one embodiment of the present disclosure.
FIG. 3 is an enlarged view of a portion of FIG. 2.
FIG. 4 is a plane view illustrating a die coater looking through the first block.
FIG. 5 is an enlarged front view illustrating part A of FIG. 4.
FIG. 6 is a front view and a perspective view of a sub shim according to one embodiment of the present disclosure.
FIG. 7 is an exploded perspective view illustrating a die coater according to another embodiment of the present disclosure.
FIG. 8 is a perspective view of the sub shim illustrated in FIG. 7.
FIG. 9 is a front view and perspective view of a sub shim according to one embodiment of the present disclosure.
FIG. 10 is a front view and perspective view of a sub shim according to one embodiment of the present disclosure.

### [Detailed Description]

Hereinafter, the present disclosure will be described in detail with reference to the drawings. Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

Accordingly, it is to be understood that the embodiments described herein, and the configurations illustrated in the drawings are only the most preferred embodiments of the present disclosure and are not intended to be representative of all of the technical ideas of the present disclosure, and that there may be various equivalents and modifications that may be substituted for them at the time of filing.

In addition, in describing the present disclosure, specific descriptions of related disclosed configurations or functions are omitted where it is considered that such detailed descriptions would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

Embodiment of the present disclosure relates to a die coater capable of effectively and simultaneously coating two different types of liquids on an electrode base material of an electrode for a secondary battery.

In one example, a die coater of an embodiment of the present disclosure includes a first block having an insulating liquid inlet, a second block coupling to the first block, and a shim assembly interposed between the first block and the second block to form a first slit and a second slit separated from each other.

In exemplary embodiments, the first block includes: a fixing portion having a fixing flow path therein that becomes a transfer path for an insulating liquid flowed in through the insulating liquid inlet; and a lip block configured to be coupled to and detachable from the fixing portion and being a front end of the first block. In addition, the lip block comprises an insulating liquid flow path connected to the fixing flow path and being a transfer path for insulating liquid flowed in through the fixing flow path. The die coater is provided with several kinds of lip blocks having different paired insulating liquid flow paths formed according to different positions of the second slit, through which the insulating liquid is discharged, said different lip blocks being configured to replace the lip block to adapt the die coater e to a change in the position of the second slit.

Accordingly, even if the position of the second slit is changed due to a change in the coating pattern of the electrode, the die coater can be adapted to the change in the coating pattern by selecting a lip block corresponding with the changed position of the second slit and coupling it to the fixing portion. Therefore, the inconvenience and cost due to newly manufacturing the overall die coater are reduced.

The die coater of an embodiment of the present disclosure comprises a shim assembly that may include a body shim and a sub shim. The body shim forms a first slit for discharging an electrode slurry, and the sub shim forms a second slit for discharging an insulating liquid supplied through an insulating liquid inlet of the lip block. In particular, the body shim and the sub shim have the same height and do not overlap top and bottom, and accordingly, the body shim and the sub shim are located on the same plane between the first block and the second block.

In one embodiment, the sub shim may be configured for coupling to and detachable from the body shim. In another embodiment, the sub shim and the body shim may be integrally formed with each other.

According to the die coater of an embodiment of the present disclosure, it is configured to discharge two different types of liquid, such as an electrode slurry and an insulating liquid, simultaneously, and in particular, the first slit and the second slit discharging the electrode slurry and the insulating liquid, respectively, are physically separated from each other in the die coater, thereby internal mixing of the electrode slurry and the insulating liquid can be prevented.

Hereinafter, some embodiments of a die coater according to the present disclosure will be described in detail with reference to the accompanying drawings.

### [First embodiment]

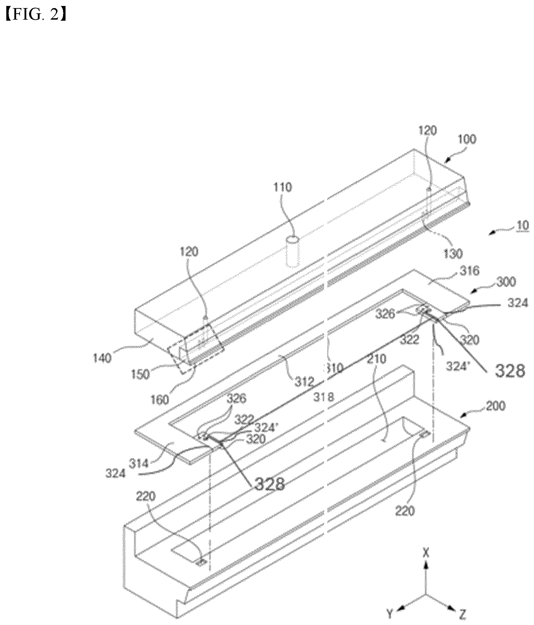

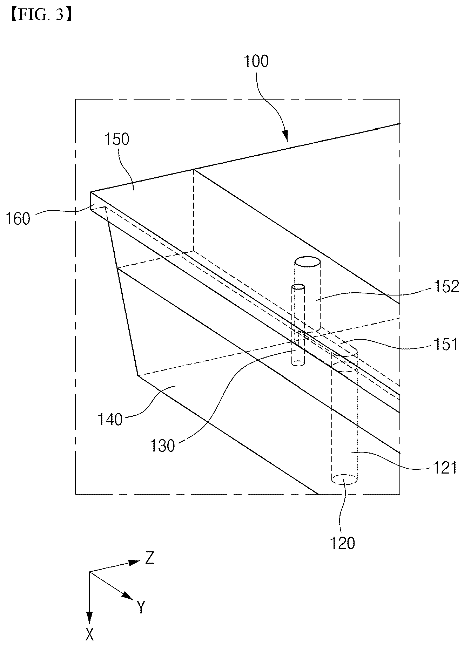

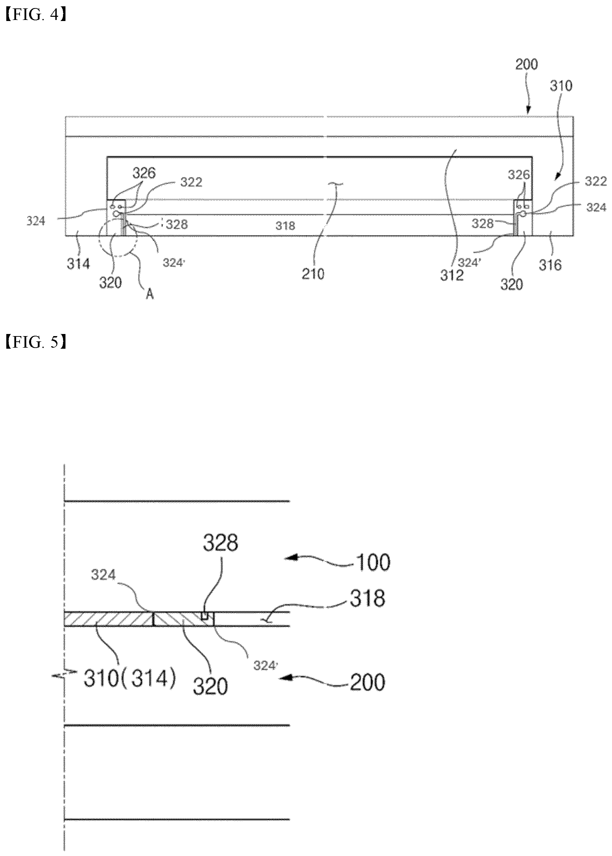

FIG. 2 is an exploded perspective view illustrating a die coater according to one embodiment of the present disclosure, FIG. 3 is an enlarged view of a portion of FIG. 2, FIG. 4 is a plane view illustrating a die coater looking through the first block, and FIG. 5 is an enlarged front view illustrating part A of FIG. 4.

Referring to FIG. 2, the overall configuration of a die coater 10 according to an embodiment of the present disclosure will be described.

As described above, embodiments of the present disclosure relate to a die coater 10 capable of effectively and simultaneously coating two different types of liquids on a current collector for a secondary battery. The two different types of liquid may be, for example, an electrode slurry and an insulating liquid.

The die coater 10 of embodiments of the present disclosure includes a first block 100 and a second block 200, and a shim assembly 300 interposed therebetween. In particular, the shim assembly 300 in an embodiment of the present disclosure includes a body shim 310 and one or two or more sub shims 320.

In one embodiment, the sub shim 320 may be configured for coupling to and detachable from the body shim 310. In another embodiment, the sub shim 320 and the body shim 310 may be integrally formed.

The first block 100 is a portion comprising approximately half of the body of the die coater 10, which comprises an insulating liquid inlet 120. The second block 200 is the portion occupying the other half of the body coupling to the first block 100, and in some embodiments, the second block 200 may comprise a manifold 210 for accommodating an electrode slurry. Although FIG. 2 illustrates an embodiment in which the manifold 210 is provided in the second block 200, the manifold 210 may be formed in the first block 100; in other words, the manifold 210 for accommodating the electrode slurry may be provided in any one of the first block 100 and the second block 200.

For reference, FIG. 2 illustrates an electrode slurry inlet 110 in connected to the manifold 210 of the second block 200 formed in the first block 100, although the electrode slurry inlet 110 may also be formed in the second block 200. On the other hand, the insulating liquid inlet 120 has to be formed only in the first block 100, because the layout design is limited by the flow path 322 formed in the sub shim 320 and the airtight structure, which will be described later.

Referring to FIG. 2 and FIG. 3, the first block 100 includes a fixing portion 140 and a lip block 150, wherein the lip block 150 is configured for coupling to and detachable from the fixing portion 140. The lip block 150 includes a lip 160 as a front end portion of the first block 100. The lip 160 serves to generate shear between the front end of the die coater 10 and the backup roll (not shown), thereby smoothing the electrode slurry and insulating liquid.

The fixing portion 140 has a fixing flow path 121 that serves as a transfer path for the insulating liquid flowed in through the insulating liquid inlet 120. The fixing flow path 121 is formed in the inside of the fixing portion 140 and has a hollow internal space suitable for the insulating liquid to be transferred. The fixing flow path 121 extends in a direction (X direction) from the upper portion of the die coater to the lower portion of the die coater. One end of the fixing flow path 121 is connected with the insulating liquid inlet 120, and the other end of the fixing flow path 121 is connected with the first insulating liquid flow path 151.

The lip block 150, which is configured for coupling to and detachable from the fixing portion 140, also has insulating liquid flow paths 151,152 that serve as transfer paths for the insulating liquid. The insulating liquid flow paths 151,152 are formed in the inside of the lip block 150 and have a hollow internal space suitable for the insulating liquid to be transferred. The insulating liquid flow paths 151,152 are connected to the fixing flow path 121. Thus, the insulating liquid flowed in through the insulating liquid inlet 120 of the first block 100 is discharged sequentially through the fixing flow path 121 of the fixing portion 140 and the insulating liquid flow path 151,152 of the lip block 150, and finally discharged through the second slit 328.

The lip block 150 comprising the first block 100 may be provided with several types of lip blocks 150 having paired insulating liquid flow paths formed according to the position of the second slit 328 through which the insulating liquid is discharged. When the coating pattern of the electrode is changed, it is general that the portion where the insulating liquid is applied changes its position along the width direction. Accordingly, the second slit 328 of the die coater 10 changes the position along the width direction (Y direction) of the die coater 10. Meanwhile, since the insulating liquid inlet 120 and the fixing flow path 121 of the first block 100 are fixed, an inside of the lip block 150 according to an embodiment of the present disclosure is provided with a lip block 150 having an insulating liquid flow path in which the one side end is connected with the fixing flow path 121 and the other side end is connected with the second slit 328, and several kinds of lip blocks having a paired insulating liquid flow path for each of the positions of the second slit are provided.

Accordingly, when the position of the second slit 328, which the insulating liquid is discharged, is changed due to a change in the coating pattern of the insulating liquid, the operator can select a lip block 150 that is paired with the second slit that has changed position among the several kinds of lip blocks 150, and correspond to the change in the coating pattern of the insulating liquid by replacing the lip block 150.

The insulating liquid flow paths provided in the lip block 150 include a first insulating liquid flow path 151 and a second insulating liquid flow path 152. One end of the first insulating liquid flow path 151 is connected with the fixing flow path 121 provided in the fixing portion 140 to flow in the insulating liquid flowed in the fixing flow path 121 into the lip block 150. Further, the first insulating liquid flow path 151 extends in a direction perpendicular to the extension direction of the fixing flow path 121 in order to adapt when the second slit 328 changes position along the width direction (Y direction).

In one embodiment, the lip block 150 is provided in various types with different lengths in the width direction of the first insulating liquid flow path 151. When the electrode coating pattern is changed, the sub shim 320 forming the second slit 328 changes the position along the width direction (Y direction) of the die coater. As explained with reference to FIGS. 2 and 3, when the sub shim 320 is moved in the direction of the outer side of the die coater 10 along the width direction (Y direction), it becomes distant from the insulating liquid inlet 120. According to the present disclosure, among various types of lip blocks 150, a lip block 150 having the first insulating liquid flow path 151 having a width direction length corresponding to the width direction length from the insulating liquid inlet 120 to the sub shim 320 can be selected in response to a change in the position of the sub shim.

One end of the second insulating liquid flow path 152 is connected with the other end of the first insulating liquid flow path 151 and extending in a direction parallel to the fixing flow path 121 (X direction). In addition, the other end of the second insulating liquid flow path 152 is connected with the second slit 328. Therefore, the insulating liquid flowed in the lip block 150 can be discharged to the outside through the second slit 328 via the first insulating liquid flow path 151, the second insulating liquid flow path 152.

The shim assembly 300 is interposed between the first block 100 and the second block 200, wherein the shim assembly 300 is basically interposed between the first block 100 and the second block 200 to form a slit at a height suitable for discharging the electrode slurry and insulating liquid. **In** addition, the shim assembly 300 serves to limit the flow direction of the electrode slurry and insulating liquid flowed in or accommodated in the die coater 10 so that it is discharged toward the slit without flowing backward, and further serves to seal the electrode slurry and insulating liquid from leaking into any part of the die coater 10 except the slit.

Referring to FIGS. 2 and 4 to 5, the shim assembly 300 includes a body shim 310 and a sub shim 320, which form a first slit 318 and a second slit 328 separated from each other. Specifically, the body shim 310 forms the first slit 318 for discharging an electrode slurry accommodated in the manifold 210 of the second block 200, and the sub shim 320 forms the second slit 328 for discharging an insulating liquid supplied through the first block 100.

Moreover, the body shim 310 and the sub shim 320 have the same height, and they do not overlap top and bottom; thus, the body shim 310 and the sub shim 320 are located on the same plane between the first block 100 and the second block 200.

Referring to FIG. 2, the body shim 310 includes a base 312 extending along the width direction (Y direction), and a first guide 314 and a second guide 316 protruding and extending from both ends of the base 312, respectively. The first guide 314 and the second guide 316 are spaced apart from each other in the width direction (Y direction) with the manifold 210 between them, and the first guide 314 and the second guide 316 may each be disposed so as not to cover the manifold 210. The first guide 314 and the second guide 316 may each have a rectangular shape having a uniform width along the width direction (Y direction). A body shim 310 is coupled to the first block 100 and the second block 200. The body shim 310 may be coupled to the first block 100 and the second block 200 by fixing pins, fixing bolts, or both, and the body shim 310 may be provided with coupling holes into which they may be inserted.

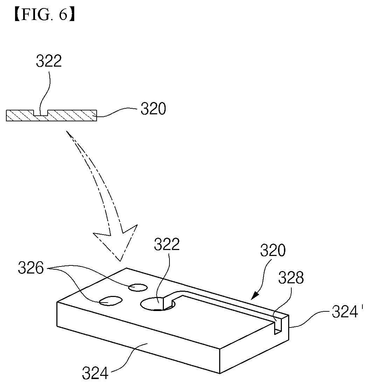

Referring to FIG. 2 and FIG. 6, the sub shim 320 is open toward the first block 100 and comprises a concave flow path 322 with a bottom surface.

Here, the body shim 310 forms a first slit 318 in the space between the first and second guides 314, 316, and the open end of the concave flow path 322 having a bottom surface form a second slit 328 in the sub shim 320. The depth of the flow path 322 is smaller than the thickness (height) of the sub shim 320, so that eventually, as shown in FIG. 5, the height of the first slit 318 corresponds to the height of the body shim 310 and the height of the second slit 328 is formed smaller than the height of the sub shim 320.

Moreover, since the body shim 310 and the sub shim 320 have the same height and located on the same plane without overlapping top and bottom, the width of the first slit 318 is limited as much as the width of the sub shim 320.

For example, in the first embodiment illustrated in FIG. 2, one sidewall 324 of the paired sub shims 320 is adhered to an inside wall of the first guide 314 and the second guide 316, respectively (See FIG. 4). Accordingly, the distance between the facing sidewalls 324' of the paired sub shims 320 (opposite sides of the adhered sidewalls) corresponds to the substantial width of the first slit 318; in other words, the length of the distance between the inside walls of the first guide 314 and the second guide 316 minus the width of the sub shim 320 becomes the width of the first slit 318.

As such, considering the structure of the second slit 328 formed by the sub shim 320, it is blocked from the electrode slurry of the first slit 318 by the two sidewalls 324, 324' of the sub shim 320. Further, since the lower side of the flow path 322 is a bottom surface and the upper side is adhered to the first block 100, the sub shim 320 is structurally completely isolated from the electrode slurry. Thus, the die coater 10 according to an embodiment of the present disclosure is significantly less likely to have two different kinds of liquids mixed inside.

Referring to FIG. 2, FIG. 4, and FIG. 6, the closed end of the concave flow path 322 formed in the sub shim 320 is connected to the insulating liquid flow path 151,152 of the lip block 150 to receive insulating liquid. Specifically, the insulating liquid supplied from the insulating liquid inlet 120 of the first block 100 is supplied to the flow path 322 of the sub shim 320 by sequentially passing through the fixing flow path 121 of the fixing portion 140, the first insulating liquid flow path 151 of the lip block 150, and the second insulating liquid flow path 152. For reference, as shown in FIG. 2, the number and position of the insulating liquid inlets 120 correspond to the number and position of the sub shims 320.

In addition, the sub shim 320 may be coupled to the first block 100. The sub shim 320 may be coupled to any one of the fixing portion 140 and the lip block 150 of the first block 100. In the first embodiment illustrated in FIG. 2, the sub shim 320 is coupled to the lip block 150 of the first block 100. The sub shim 320 may be fixed to the first block 100 with a pin member 130 inserted into a coupling hole 326 provided in the sub shim 320. The position of the sub shim 320 is fixed by the pin member 130. The pin member 130 may be disposed parallel to the second insulating liquid flow path 152 of the lip block 150 or may protrude around the fixing flow path 121 of the fixing portion 140.

Here, the pin member 130 and the coupling hole 326 are preferably designed such that the fixed position and direction of the sub shim 320 is uniformly determined. Specifically, the sub shim 320 should not rotate when inserted into the pin member 130 to ensure that the installation direction is uniformly determined, which may be accomplished by designing the pin member 130 in a plurality, forming the pin member 130 and the coupling hole 326 in a shape other than a circular cross-section, or a combination of these structures. Further, if necessary, the second block 200 may be provided with a concave pin insertion hole 220 to accommodate the protruding pin member 130.

### [Second embodiment]

The second embodiment of the present disclosure is an embodiment suitable for applying two or more rows of electrode slurry and insulating liquid, respectively, on the current collector, which is an electrode base material, and then a slitting process is performed.

In other words, the second embodiment is an embodiment suitable for simultaneously applying active material coatings to have a structure of "insulating liquid - electrode slurry - insulating liquid" in two or more rows on the current collector.

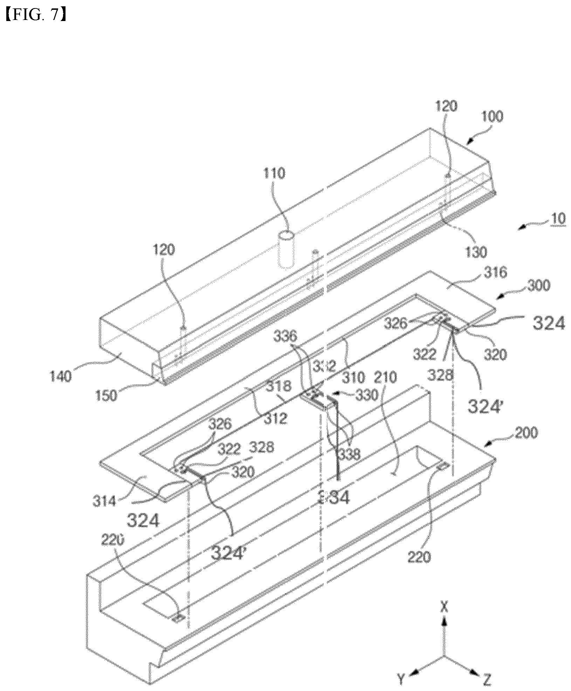

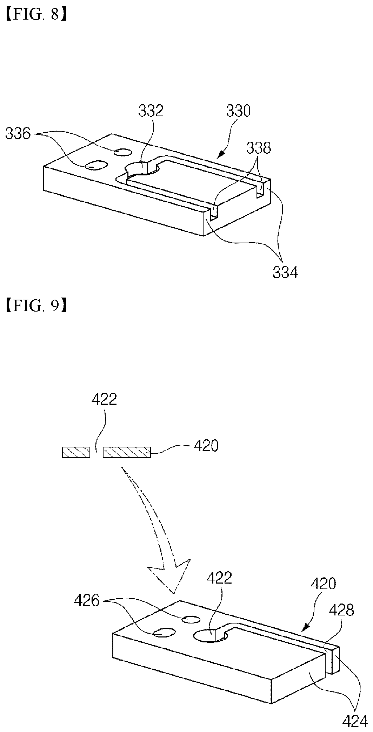

FIG. 7 is an exploded perspective view illustrating a die coater according to another embodiment of the present disclosure, and FIG. 8 is a perspective view of the sub shim 330 illustrated in FIG. 7.

Referring to these drawings, the second embodiment includes the structure of the first embodiment described above, but further includes a second sub shim 330. The second sub shim 330 is installed in the middle of the width direction of the die coater 10 (Y direction).In some embodiments, the second sub shim 330 discharges insulating liquid in two streams through a U-shaped flow path 332. In other words, the second sub shim 330 is configured to discharge insulating liquid in two streams corresponding to each of the sub shims 320 on both sides adhered and disposed to the first and second guides 314, 316.

In addition, a second sub shim 330 is disposed between the first and second guides 314, 316 of the body shim 310, and in the same manner that the aforementioned sub shims 320 limit the substantial width of the first slit 318, the second sub shim 330 also functions as a limiting element of the first slit 318. Thus, the second sub shim 330, disposed in the middle of the first slit 318, splits the insulating liquid into two streams, thereby causing the electrode slurry to be discharged in two parallel rows. The height of the second sub shim 330 corresponds to the height of the sub shims 320.

According to such disposition of the second sub shim 330 and the two-row discharge structure of the insulating liquid, the application structure of "insulating liquid - electrode slurry - insulating liquid" on the current collector is formed in two rows parallel according to the length direction of the current collector, and two current collector rolls can be obtained by performing a slitting process to cut the middle of the two parallel rows.

Referring to FIG. 8, the second sub shim 330 has the same configuration as the sub shim 320 except for the structure of the U-shaped flow path 332. Specifically, the second sub shim 330 has a concave U-shaped flow path 332 that is open toward the first block 100 and has a bottom surface. The closed end of the U-shaped flow path 332 is connected to the insulating liquid flow path of the lip block 150, and the two open ends of the U-shaped flow path 332 form a third slit 338. Similarly, the position of the second sub shim 330 is fixed such that the coupling hole 336 is engaged in the pin member 130 and does not rotate.

Here, in the second embodiment, although it is described that the electrode slurry and the insulating liquid are simultaneously applied in two rows in parallel by adding the second sub shim 330, it can be obviously understood by those skilled in the art that two or more second sub shims 330 may be added and thus applying in three or more rows.

### [Third embodiment]

FIG. 9 is a front view and perspective view of a sub shim according to one embodiment of the present disclosure, and the sub shim of FIG. 9 will be described, with focusing on the differences from the sub shim 320 described with reference to FIG. 6.

Referring to FIG. 9, the sub shim 420 comprises a flow path 422 that penetrates in the thickness direction of the sub shim 420. Compared to the embodiment illustrated in FIG. 6, the flow path 422 is open in the direction toward the first block and is also open in the direction toward the second block. A closed end of the flow path 422 is connected to an insulating liquid flow path 152 of the lip block 150 to receive insulating liquid, and an open end of the flow path 422 forms a second slit 428. The depth of the flow path 422 and the height of the second slit 428 are each the same as the thickness of the sub shim 420.

### [Fourth embodiment]

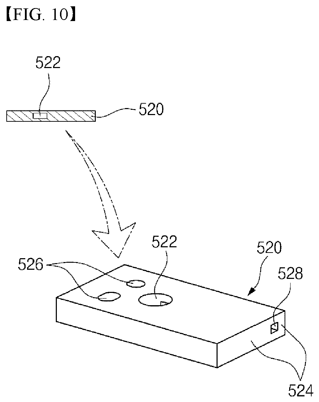

FIG. 10 is a front view and perspective view of a sub shim according to one embodiment of the present disclosure, and the sub shim of FIG. 10 will be described, with focusing on the differences from the sub shim 320 described with reference to FIG. 6.

Referring to FIG. 10, the sub shim 520 has a flow path 522 therein. Compared to the embodiment shown in FIG. 6, the flow path 522 is not open in the direction toward the first block. The closed end of the flow path 522 is connected with the insulating liquid flow path 152 of the lip block 150 to receive insulating liquid, and the open end of the flow path 522 forms a second slit 528. A height of the second slit 528 is formed smaller than a thickness of the sub shim 520.

### [Description of Reference Numerals]

| | | | |
|---|---|---|---|
| 10: | die coater | | |
| 100: | first block | 200: | second block |
| 110: | electrode slurry inlet | 120: | insulating liquid inlet |
| 121: | fixing flow path | | |
| 130: | pin member | 140: | fixing portion |
| 150: | lip block | 160: | lip |
| 151: | first insulating liquid flow path | 152: | second insulating liquid flow path |
| 210: | manifold | 220: | pin insertion hole |
| 300: | shim assembly | | |
| 310: | body shim | 320, 420, 520: | sub shim |
| 312: | base | 314: | first guide |
| 316: | second guide | 318: | first slit |
| 322, 422, 522: | flow path | 324, 424, 524: | sidewall |
| 326, 426, 526: | coupling hole | | |
| 328, 428, 528: | second slit | | |
| 330: | second sub shim | 332: | U-shaped flow path |
| 334: | sidewall | 336: | coupling hole |
| 338: | third slit | | |

## Claims

1. A die coater (10) comprising:
a first block (100) having an insulating liquid inlet (120) and a second block (200) placed on the first block (100); and
a shim assembly (300) interposed between the first block (100) and the second block (200) and configured to form a first slit (318) and a second slit (328, 428, 528) separated from each other;
wherein the first block (100) comprises:
a fixing portion (140) having a fixing flow path (121) therein that is a transfer path for an insulating liquid flowing in through the insulating liquid inlet (120); and
a lip block (150) configured to be coupled to and detachable from the fixing portion (140) and forming a front end of the first block (100),
**characterized in that** the lip block (150) has an insulating liquid flow (151, 152) path that is connected to the fixing flow path (121) and is a transfer path for the insulating liquid flowing in from the fixing flow path (121) to be discharged through the second slit (328, 428, 528).

2. The die (10) coater of claim 1, wherein the insulating liquid flow path (151, 152) comprises:
a first insulating liquid flow path (151), one end of which is connected to the fixing flow path (121) and extends in a direction (Y) perpendicular to an extension direction (X) of the fixing flow path (121); and
a second insulating liquid flow path (152) connected to the other end of the first insulating liquid flow path (151) and extending in a direction (X) parallel to the fixing flow path (121).

3. The die coater (10) of claim 1 or 2, wherein the fixing flow path (121) extends in a direction from an upper portion of the die coater (10) to a lower portion of the die coater (10).

4. The die coater (10) of any one of claims 1 to 3, wherein one of the first block (100) and the second block (200) is provided with a manifold (210) receiving an electrode slurry.

5. The die coater (10) of any one of claims 1 to 4, wherein the shim assembly (300) comprises a body shim (310) forming the first slit (318) for discharging an electrode slurry and a sub shim (320, 420, 520) forming the second slit (328, 428, 528) for discharging the insulating liquid.

6. The die coater (10) of claim 5, wherein the body shim (310) and the sub shim (320, 420, 520) have a same height and do not overlap top and bottom to be located on a same plane between the first block (100) and the second block (200).

7. The die coater (10) of claim 5 or 6, wherein a height of the first slit (318) corresponds to a height of the body shim (310), and a height of the second slit (328, 428, 528) is smaller than a height of the sub shim (320, 420, 520).

8. The die coater (10) of any one of claims 5 to 7, wherein the sub shim (320, 420, 520) comprises a concave flow path (322, 422, 522) that is open toward the first block (100) and has a bottom surface.

9. The die coater (10) of any one of claims 5 to 7, wherein the sub shim (320, 420, 520) comprises a flow path (322, 422, 522) that extends through the sub shim (320, 420, 520) in a thickness direction of the sub shim (320, 420, 520).

10. The die coater (10) of any one of claims 5 to 7, wherein the sub shim (320, 420, 520) comprises a flow path (322, 422, 522) therein.

11. The die coater (10) of any one claim of claim 8 to 10, wherein a closed end of the flow path (322, 422, 522) is connected to an insulating liquid flow path (151, 152) of the lip block (150), wherein an open end of the flow path forms the second slit (328, 428, 528).

12. The die coater (10) of any one of claims 5 to 11, wherein the body shim (310) comprises:
a base (312) extending along a width direction (Y); and
first (314) and second guides (316) protruding and extending from both ends of the base (312), respectively.

13. The die coater (10) of any one of claims 5 to 12, comprising two or more sub shims (320, 420, 520).

14. The die coater (10) of any one of claims 5 to 13, wherein the or each sub shim (320, 402, 520) is coupled to the first block (100).

15. The die coater (10) of any one of claims 5 to 14, wherein the or each sub shim (320, 420, 520) is coupled to a lip block (150) of the first block (100).

16. The die coater (10) of any one of claims 5 to 15, wherein the body shim (310) is coupled to the first block (100) and the second block (200).

17. The die coater (10) of any one of claims 5 to 16, wherein the body shim (320) does not cover the manifold (210).

18. The die coater (10) of claim 2, wherein the lip block (150) is provided in various types with different lengths in the width direction (Y) of the first insulating liquid flow path (151).

19. The die coater (10) of any one of claims 1 to 18, wherein several kinds of lip blocks (150) having paired insulating liquid flow paths (151, 152) formed according to a position of the second slit (328, 428, 528) are provided, thereby the lip blocks (150) are configured to be replaced to adapt to a change in position of the second slit (328, 428, 528).

## Patentansprüche

1. Düsenbeschichter (10), umfassend:
einen ersten Block (100), welcher einen Isolierungsflüssigkeitseinlass (120) aufweist, und einen zweiten Block (200), welcher auf dem ersten Block (100) platziert ist; und
eine Distanzelement-Anordnung (300), welche zwischen dem ersten Block (100) und dem zweiten Block (200) eingefügt ist und dazu eingerichtet ist, einen ersten Schlitz (318) und einen zweiten Schlitz (328, 428, 528) zu bilden, welche voneinander getrennt sind;
wobei der erste Block (100) umfasst:
einen Fixierungsabschnitt (140), welcher einen Fixierungsströmungspfad (121) darin aufweist, der ein Übertragungspfad für eine Isolierungsflüssigkeit ist, welche durch den Isolierungsflüssigkeitseinlass (120) einströmt; und
einen Lippenblock (150), welcher dazu eingerichtet ist, mit dem Fixierungsabschnitt (140) gekoppelt und davon lösbar zu sein, und welcher ein vorderes Ende des ersten Blocks (100) bildet,
**dadurch gekennzeichnet, dass** der Lippenblock (150) einen Isolierungsflüssigkeitsströmungspad (151, 152) aufweist, welcher mit dem Fixierungsströmungspfad (121) verbunden ist und welcher ein Übertragungspfad für die Isolierungsflüssigkeit ist, welche aus dem Fixierungsströmungspfad (121) einströmt, um durch den zweiten Schlitz (328, 428, 528) abgegeben zu werden.

2. Düsenbeschichter (10) nach Anspruch 1, wobei der Isolierungsflüssigkeitsströmungspfad (151, 152) umfasst:
einen ersten Isolierungsflüssigkeitsströmungspfad (151), von welchem ein Ende mit dem Fixierungsströmungspfad (121) verbunden ist und sich in einer zu einer Erstreckungsrichtung (X) des Fixierungsströmungspfads (121) senkrechten Richtung (Y) erstreckt; und
einen zweiten Isolierungsflüssigkeitsströmungspfad (152), welcher mit dem anderen Ende des ersten Isolierungsflüssigkeitsströmungspfads (151) gekoppelt ist und sich in einer zu dem Fixierungsströmungspfad (121) parallelen Richtung (X) erstreckt.

3. Düsenbeschichter (10) nach Anspruch 1 oder 2, wobei sich der Fixierungsströmungspfad (121) in einer Richtung von einem oberen Abschnitt des Düsenbeschichters (10) zu einem unteren Abschnitt des Düsenbeschichters (10) erstreckt.

4. Düsenbeschichter (10) nach einem der Ansprüche 1 bis 3, wobei einer aus dem ersten Block (100) und dem zweiten Block (200) mit einem Verteiler (210) bereitgestellt ist, welcher eine Elektrodenaufschlämmung aufnimmt.

5. Düsenbeschichter (10) nach einem der Ansprüche 1 bis 4, wobei die Distanzelement-Anordnung (300) ein Haupt-Distanzelement (310), welches den ersten Schlitz (318) zum Abgeben einer Elektrodenaufschlämmung bildet, und ein Teil-Distanzelement (320, 420, 520) umfasst, welches den zweiten Schlitz (328, 428, 528) zum Abgeben der Isolierungsflüssigkeit bildet.

6. Düsenbeschichter (10) nach Anspruch 5, wobei das Haupt-Abstandselement (310) und das Teil-Abstandselement (320, 420, 520) eine gleiche Höhe aufweisen und sich oben und unten nicht überlappen, so dass sie auf einer gleichen Ebene zwischen dem ersten Block (100) und dem zweiten Block (200) angeordnet sind.

7. Düsenbeschichter (10) nach Anspruch 5 oder 6, wobei eine Höhe des ersten Schlitzes (318) einer Höhe des Haupt-Distanzelements (310) entspricht und eine Höhe des zweiten Schlitzes (328, 428, 528) kleiner ist als eine Höhe des Teil-Distanzelements (320, 420, 520).

8. Düsenbeschichter (10) nach einem der Ansprüche 5 bis 7, wobei das Teil-Distanzelement (320, 420, 520) einen konkaven Strömungspfad (322, 422, 522) umfasst, welcher in Richtung des ersten Blocks (100) offen ist und eine untere Fläche aufweist.

9. Düsenbeschichter (10) nach einem der Ansprüche 5 bis 7, wobei das Teil-Distanzelement (320, 420, 520) einen Strömungspfad (322, 422, 522) umfasst, welcher sich in einer Dickenrichtung des Teil-Distanzelements (320, 420, 520) durch das Teil-Distanzelement (320, 420, 520) erstreckt.

10. Düsenbeschichter (10) nach einem der Ansprüche 5 bis 7, wobei das Teil-Distanzelement (320, 420, 520) einen Strömungspfad (322, 422, 522) darin umfasst.

11. Düsenbeschichter (10) nach einem der Ansprüche 8 bis 10, wobei ein geschlossenes Ende des Strömungspfads (322, 422, 522) mit einem Isolierungsflüssigkeitsströmungspfad (151, 152) des Lippenblocks (150) verbunden ist, wobei ein offenes Ende des Strömungspfads den zweiten Schlitz (328, 428, 528) bildet.

12. Düsenbeschichter (10) nach einem der Ansprüche 5 bis 11, wobei das Haupt-Distanzelement (310) umfasst:
eine Basis (312), welche sich entlang einer Breitenrichtung (Y) erstreckt; und
eine erste (314) und eine zweite Führung (316), welche jeweils von beiden Enden der Basis (312) vorstehen und sich davon erstrecken.

13. Düsenbeschichter (10) nach einem der Ansprüche 5 bis 12, umfassend zwei oder mehr Teil-Distanzelemente (320, 420, 520).

14. Düsenbeschichter (10) nach einem der Ansprüche 5 bis 13, wobei das oder jedes Teil-Distanzelement (320, 420, 520) mit dem ersten Block (100) gekoppelt ist.

15. Düsenbeschichter (10) nach einem der Ansprüche 5 bis 14, wobei das oder jedes Teil-Distanzelement (320, 420, 520) mit einem Lippenblock (150) des ersten Blocks (100) gekoppelt ist.

16. Düsenbeschichter (10) nach einem der Ansprüche 5 bis 15, wobei das Haupt-Distanzelement (310) mit dem ersten Block (100) und dem zweiten Block (200) gekoppelt ist.

17. Düsenbeschichter (10) nach einem der Ansprüche 5 bis 16, wobei das Haupt-Distanzelement (310) den Verteiler (210) nicht abdeckt.

18. Düsenbeschichter (10) nach Anspruch 2, wobei der Lippenblock (150) in verschiedenen Typen mit verschiedenen Längen in der Breitenrichtung (Y) des ersten Isolierungsflüssigkeitsströmungspfads (151) bereitgestellt ist.

19. Düsenbeschichter (10) nach einem der Ansprüche 1 bis 18, wobei mehrere Arten von Lippenblöcken (150) bereitgestellt sind, welche gepaarte Isolierungsflüssigkeitsströmungspfade (151, 152) aufweisen, die gemäß einer Position des zweiten Schlitzes (328, 428, 528) gebildet sind, wodurch die Lippenblöcke (150) dazu eingerichtet sind, ersetzt zu werden, um sich an eine Änderung der Position des zweiten Schlitzes (328, 428, 528) anzupassen.

## Revendications

1. Enducteur à filière (10) comprenant :
un premier bloc (100) ayant une entrée de liquide isolant (120) et un second bloc (200) placé sur le premier bloc (100) ; et
un ensemble cale (300) interposé entre le premier bloc (100) et le second bloc (200) et
configuré pour former une première fente (318) et une seconde fente (328, 428, 528) séparées l'une de l'autre ;
dans lequel le premier bloc (100) comprend :
une partie de fixation (140) ayant un chemin d'écoulement de fixation (121) en son sein qui est un chemin de transfert pour un liquide isolant entrant en s'écoulant par l'entrée de liquide isolant (120) ; et
un bloc à lèvre (150) configuré pour être couplé à la partie de fixation (140) et détachable de celle-ci et formant une extrémité avant du premier bloc (100),
**caractérisé en ce que** le bloc à lèvre (150) possède un chemin d'écoulement de liquide isolant (151, 152) qui est raccordé au chemin d'écoulement de fixation (121) et est un chemin de transfert pour que le liquide isolant entrant en s'écoulant en provenance du chemin d'écoulement de fixation (121) soit évacué par la seconde fente (328, 428, 528).

2. Enducteur à filière (10) selon la revendication 1, dans lequel le chemin d'écoulement de liquide isolant (151, 152) comprend :
un premier chemin d'écoulement de liquide isolant (151), dont une extrémité est raccordée au chemin d'écoulement de fixation (121) et s'étend dans une direction (Y) perpendiculaire à une direction d'extension (X) du chemin d'écoulement de fixation (121) ; et
un second chemin d'écoulement de liquide isolant (152) raccordé à l'autre extrémité du premier chemin d'écoulement de liquide isolant (151) et s'étendant dans une direction (X) parallèle au chemin d'écoulement de fixation (121).

3. Enducteur à filière (10) selon la revendication 1 ou 2, dans lequel le chemin d'écoulement de fixation (121) s'étend dans une direction allant d'une partie supérieure de l'enducteur à filière (10) à une partie inférieure de l'enducteur à filière (10).

4. Enducteur à filière (10) selon l'une quelconque des revendications 1 à 3, dans lequel l'un parmi le premier bloc (100) et le second bloc (200) est muni d'un collecteur (210) recevant une suspension d'électrode.

5. Enducteur à filière (10) selon l'une quelconque des revendications 1 à 4, dans lequel l'ensemble cale (300) comprend une cale de corps (310) formant la première fente (318) pour l'évacuation d'une suspension d'électrode et une sous-cale (320, 420, 520) formant la seconde fente (328, 428, 528) pour l'évacuation du liquide isolant.

6. Enducteur à filière (10) selon la revendication 5, dans lequel la cale de corps (310) et la sous-cale (320, 420, 520) possèdent une même hauteur et ne se chevauchent pas par-dessus et par-dessous pour être situées sur un même plan entre le premier bloc (100) et le second bloc (200).

7. Enducteur à filière (10) selon la revendication 5 ou 6, dans lequel une hauteur de la première fente (318) correspond à une hauteur de la cale de corps (310), et une hauteur de la seconde fente (328, 428, 528) est plus petite qu'une hauteur de la sous-cale (320, 420, 520).

8. Enducteur à filière (10) selon l'une quelconque des revendications 5 à 7, dans lequel la sous-cale (320, 420, 520) comprend un chemin d'écoulement concave (322, 422, 522) qui est ouvert vers le premier bloc (100) et possède une surface de fond.

9. Enducteur à filière (10) selon l'une quelconque des revendications 5 à 7, dans lequel la sous-cale (320, 420, 520) comprend un chemin d'écoulement (322, 422, 522) qui s'étend à travers la sous-cale (320, 420, 520) dans une direction d'épaisseur de la sous-cale (320, 420, 520).

10. Enducteur à filière (10) selon l'une quelconque des revendications 5 à 7, dans lequel la sous-cale (320, 420, 520) comprend un chemin d'écoulement (322, 422, 522) en son sein.

11. Enducteur à filière (10) selon une quelconque revendication des revendications 8 à 10, dans lequel une extrémité fermée du chemin d'écoulement (322, 422, 522) est raccordée à un chemin d'écoulement de liquide isolant (151, 152) du bloc à lèvre (150), dans lequel une extrémité ouverte du chemin d'écoulement forme la seconde fente (328, 428, 528).

12. Enducteur à filière (10) selon l'une quelconque des revendications 5 à 11, dans lequel la cale de corps (310) comprend :
une base (312) s'étendant le long d'une direction de largeur (Y) ; et
des premier (314) et second (316) guides faisant saillie et s'étendant à partir des deux extrémités de la base (312), respectivement.

13. Enducteur à filière (10) selon l'une quelconque des revendications 5 à 12, comprenant deux sous-cales (320, 420, 520) ou plus.

14. Enducteur à filière (10) selon l'une quelconque des revendications 5 à 13, dans lequel la ou chaque sous-cale (320, 420, 520) est couplée au premier bloc (100).

15. Enducteur à filière (10) selon l'une quelconque des revendications 5 à 14, dans lequel la ou chaque sous-cale (320, 420, 520) est couplée à un bloc à lèvre (150) du premier bloc (100).

16. Enducteur à filière (10) selon l'une quelconque des revendications 5 à 15, dans lequel la cale de corps (310) est couplée au premier bloc (100) et au second bloc (200).

17. Enducteur à filière (10) selon l'une quelconque des revendications 5 à 16, dans lequel la cale de corps (320) ne recouvre pas le collecteur (210).

18. Enducteur à filière (10) selon la revendication 2, dans lequel le bloc à lèvre (150) est fourni en divers types ayant différentes longueurs dans la direction de largeur (Y) du premier chemin d'écoulement de liquide isolant (151).

19. Enducteur à filière (10) selon l'une quelconque des revendications 1 à 18, dans lequel plusieurs genres de blocs à lèvre (150) ayant des chemins d'écoulement de liquide isolant (151, 152) appariés formés selon une position de la seconde fente (328, 428, 528) sont fournis, ce par quoi les blocs à lèvre (150) sont configurés pour être remplacés pour s'adapter à un changement de position de la seconde fente (328, 428, 528).
